# EUROPEAN PATENT APPLICATION

(11) **EP 4 806 768 A1**
(43) Date of publication of application: **16.09.2026**
(21) Application number: 26162127.0
(22) Date of filing: 03.03.2026
(51) Int. Cl.: B62D 29/00, B62D 25/08

(54) **VEHICLE FRONT PORTION FRAME STRUCTURE**

(30) Priority: 07.03.2025 JP 2025036847
(71) Applicant: Toyota Jidosha Kabushiki Kaisha, Toyota-shi, Aichi-ken 471-8571 (JP)
(72) Inventor: KOTAKI, Hiromu, TOYOTA-SHI, AICHI-KEN, 471-8571 (JP); UJU, Shizuma, TOYOTA-SHI, AICHI-KEN, 471-8571 (JP); AMEMIYA, Koji, TOYOTA-SHI, AICHI-KEN, 471-8571 (JP)
(74) Representative: Cabinet Beau de Loménie

(57) **Abstract**

A vehicle front portion frame structure (10) has: side members (26) extending in a vehicle longitudinal direction at transverse direction outer sides of a vehicle; wheelhouses (14) that are one with the side members (26) or are provided integrally with the side members (26), and that have curved portions (22) bulging out toward a rear side in a vehicle longitudinal direction; and upper members (24) that are formed integrally with the wheelhouses (14) and are provided further toward a vehicle upper side than the side members (26), and at which are formed first ribs (62) that extend toward a vehicle upper side while heading toward front pillar mounting portions (28), wherein projecting portions (60), which project out from vehicle transverse direction outer side surfaces of the curved portions (22) and extend from the side members (26) toward the first ribs (62), are provided.

## Description

### BACKGROUND

### Technical Field

The present disclosure relates to a vehicle front portion frame structure.

### Related Art

CN 117565978A discloses a technique in which a vehicle front portion frame is formed by die casting.

In the aforementioned related art, left and right front side members, left and right wheelhouses, and a cross member connecting the left and right wheelhouses are molded integrally by die casting at a vehicle front portion.

In the aforementioned related art, there is room for examining the paths along which load is transmitted from a front side member (hereinafter called "side member") toward the front pillar side at the time when load is inputted to the side member along the vehicle longitudinal direction.

### SUMMARY

In view of the above-described circumstances, an object of the present disclosure is to provide a vehicle front portion frame structure that can increase the number of transmission paths of load that is transmitted from a side member toward a front pillar side.

A vehicle front portion frame structure relating to a first aspect has: side members extending in a vehicle longitudinal direction at transverse direction outer sides of a vehicle; wheelhouses that are formed or provided integrally with the side members, and that have curved portions bulging out toward a rear side in the vehicle longitudinal direction; and upper members that are formed integrally with the wheelhouses and are provided further toward a vehicle upper side than the side members, and at which are formed first ribs that extend toward the vehicle upper side while heading toward front pillar mounting portions, wherein projecting portions, which project out from vehicle transverse direction outer side surfaces of the curved portions and extend from the side members toward the first ribs, are provided.

The vehicle front portion frame structure relating to the first aspect has the side members, the wheelhouses and the upper members. The side members extend in the vehicle longitudinal direction at the transverse direction outer sides of the vehicle. The wheelhouses are one with the side members or are provided integrally with the side members, and have curved portions that bulge out toward the rear side in the vehicle longitudinal direction.

The upper members are formed integrally with the wheelhouses, and are provided further toward the vehicle upper side than the side members. The first ribs, which extend toward the vehicle upper side while heading toward the front pillar mounting portions, are formed at the upper members. The projecting portions, which extend from the side members toward the first ribs, project out from the vehicle transverse direction outer side surfaces of the curved portions provided at the wheelhouses.

In this way, in the present aspect, due to the projecting portions being provided at the curved portions of the wheelhouses and the first ribs being provided at the upper members, load, which is inputted along the vehicle longitudinal direction to a side member, can be transmitted via the projecting portions and the first ribs. Namely, in the present aspect, load, which is inputted along the vehicle longitudinal direction to a side member, passes through the wheelhouse and the upper member via the projecting portions and the first ribs and can be transmitted toward the front pillar mounting portion (the front pillar side).

Namely, in the present aspect, at the time when load is transmitted from the side member toward the front pillar side, the number of transmission paths of the load can be increased by passing through the wheelhouse and the upper member via the projecting portions and the first ribs. Due thereto, load that is transmitted from the side member toward the front pillar side can be dispersed.

Note that "ribs" and "projecting portions" are the same in regard to the point that they are formed so as to project out from the vehicle transverse direction outer side surfaces of the wheelhouses and the upper members, but it is often the case that convex beads are formed such that the projecting heights thereof are lower than those of ribs. Therefore, what is called "projecting portions" here is used as a concept that includes convex beads other than ribs. Further, what is called "projecting height" here is the dimension along the direction of moving away from the proximal portion such as the wheelhouse or the upper member.

In a vehicle front portion frame structure relating to a second aspect, in the vehicle front portion frame structure relating to the first aspect, the plural first ribs are provided in a radial form with a side member side being a substantial center.

In the vehicle front portion frame structure relating to the second aspect, the plural first ribs, which are provided at the upper member, are provided in a radial form with the side member side being the substantial center. In this way, in the present aspect, by providing the plural first ribs at the upper member, the number of load transmission paths at the time when load, which is inputted to the side member along the vehicle longitudinal direction, is transmitted from the side member via the upper member toward the front pillar side increases by that much. Due thereto, the load that is transmitted from the side member toward the front pillar side can be dispersed.

In a vehicle front portion frame structure relating to a third aspect, in the vehicle front portion frame structure relating to the first aspect, the projecting portions are connected directly or indirectly to the first ribs.

In the vehicle front portion frame structure relating to the third aspect, the projecting portions that are provided at the curved portions of the wheelhouses are connected directly or indirectly to the first ribs that are provided at the upper members. Due thereto, the load transmission loss with respect to load that is transmitted from the projecting portions to the first ribs can be reduced.

Note that an example of "the projecting portions are connected indirectly to the first ribs" is a case in which a vertical wall portion is formed between the projecting portions and the first ribs, and the first ribs are connected to the projecting portions via this vertical wall portion.

In a vehicle front portion frame structure relating to a fourth aspect, in the vehicle front portion frame structure relating to the first aspect, projecting heights of the projecting portions are lower than projecting heights of the first ribs.

In the vehicle front portion frame structure relating to the fourth aspect, the projecting heights of the projecting portions, which are provided at the curved portions of the wheelhouses, are lower than those of the first ribs that are provided at the upper members. Due thereto, as compared with a case in which the projecting portions are formed to the same projecting heights as the first ribs, space within the wheelhouses is ensured, and the passenger compartment space is enlarged by that much.

In a vehicle front portion frame structure relating to a fifth aspect, in the vehicle front portion frame structure relating to the first aspect, width dimensions in directions substantially orthogonal to extending directions of the projecting portions are smaller than width dimensions in directions substantially orthogonal to extending directions of the first ribs.

In the vehicle front portion frame structure relating to the fifth aspect, the width dimension of the projecting portions that are provided at the curved portions of the wheelhouses is smaller than the width dimension of the first ribs that are provided at the upper members. Namely, the projecting portions are thinner than the first ribs, and the flow path surface area of molten metal is smaller at the projecting portions than at the first ribs. Therefore, in the present aspect, at the time of molding an integrally molded part, which includes the wheelhouses and the upper members, of metal, the flow rate within the projecting portions is quickened, and the filling speed of the molten metal that is guided from the projecting portions into the first ribs increases.

In a vehicle front portion frame structure relating to a sixth aspect, in the vehicle front portion frame structure relating to the first aspect, width dimensions in directions substantially orthogonal to extending directions of the projecting portions are larger than width dimensions in directions substantially orthogonal to extending directions of the first ribs.

In the vehicle front portion frame structure relating to the sixth aspect, the width dimensions of the projecting portions that are provided at the curved portions of the wheelhouses is larger than the width dimensions of the first ribs that are provided at the upper members. Namely, the projecting portions are thicker than the first ribs, and the flow path surface area of molten metal is larger at the projecting portions than at the first ribs. Therefore, in the present aspect, at the time of molding an integrally molded part, which includes the wheelhouses and the upper members, of metal, the flow of the molten metal in the projecting portions improves and the filling efficiency of the molten metal into the projecting portions improves. Due thereto, the filling efficiency of the molten metal from the projecting portions into the first ribs also improves.

In a vehicle front portion frame structure relating to a seventh aspect, in the vehicle front portion frame structure relating to the first aspect, second ribs that intersect with the first ribs are provided at the upper members.

In the vehicle front portion frame structure relating to the seventh aspect, the first ribs and the second ribs are provided at the upper members, and the second ribs intersect with the first ribs. Due thereto, in the present aspect, the number of transmission paths at the time when load, which is inputted to a side member along the vehicle longitudinal direction, is transmitted to the upper member increases more, and the load that is transmitted to the upper member can be dispersed more.

Note that "intersect" here means structures other than cases in which the second ribs are formed orthogonal to the first ribs, and further, includes also cases other than the second ribs completely intersecting the first ribs such as a so-called T-shaped connection.

In a vehicle front portion frame structure relating to an eighth aspect, in the vehicle front portion frame structure relating to the first aspect, width dimensions in directions substantially orthogonal to extending directions of the projecting portions are different at side member sides of the projecting portions from width dimensions at upper member sides of the projecting portions.

In the vehicle front portion frame structure relating to the eighth aspect, the width dimensions of the projecting portions, which are provided at the curved portions of the wheelhouses, are different at the side member sides of the projecting portions than at the upper member sides of the projecting portions. Namely, the thickness of the projecting portion is different at the side member side thereof and the upper member side thereof. For example, the width dimensions of the projecting portions become (gradually) larger or smaller from the side member side toward the upper member side. In the present aspect, by adjusting the width dimensions in relation to the shapes at the peripheries of the projecting portions, the filling efficiency of the molten metal into the first ribs can be improved.

In a vehicle front portion frame structure relating to a ninth aspect, in the vehicle front portion frame structure relating to the first aspect, the plural projecting portions extend in a radial form toward an upper member side with a side member side being a substantial center and with one place at the curved portions being a point of origin of the projecting portions.

In the vehicle front portion frame structure relating to the ninth aspect, the plural projecting portions, which are provided at the curved portions of the wheelhouses, extend in a radial form toward the upper member side, at which the first ribs are provided, with the side member side being the substantial center and with one place at the curved portion being the point of origin of the projecting portions. Due to the projecting portions being dispersed in a radial form toward the upper member side with one place being the point of origin thereof, at the point of origin side of the projecting portions, the plural projecting portions merge, and therefore, the flow path surface area is large. Thus, the flow path surface areas at the portions of the projecting portions that are set further apart from one another are small, and the flow rate can be quickened by that much.

In a vehicle front portion frame structure relating to a tenth aspect, in the vehicle front portion frame structure relating to the first aspect, the plural projecting portions extend in a radial form toward an upper member side with a side member side being a substantial center and with plural places at the curved portions being points of origin of the projecting portions.

In the vehicle front portion frame structure relating to the tenth aspect, the plural projecting portions, which are provided at the curved portions of the wheelhouses, extend in a radial form toward the upper member side, at which the first ribs are provided, with the side member side being the substantial center and with plural places at the curved portion being the points of origin of the projecting portions. Due to the points of origin of the projecting portions being at plural places, the plural projecting portions are in states of being independent of one another and can be provided with gaps between one another.

As described above, the vehicle front portion frame structure relating to the present disclosure can increase the number of transmission paths of load that is transmitted from a side member toward a front pillar side.

### BRIEF DESCRIPTION OF THE DRAWINGS

Exemplary embodiments of the present disclosure will be described in detail based on the following figures, wherein:
Fig. 1 is a perspective view in which a vehicle front portion, to which a vehicle front portion frame structure relating to a present embodiment is applied, is viewed from an obliquely front left side and from the upper side;
Fig. 2 is a side view illustrating the vehicle front portion to which the vehicle front portion frame structure relating to the present embodiment is applied;
Fig. 3 is a partial, enlarged, perspective view illustrating, in an enlarged manner, a portion of the vehicle front portion to which the vehicle front portion frame structure relating to the present embodiment is applied;
Fig. 4 is an explanatory drawing for explaining the flow of molten metal at the time of molding the vehicle front portion to which the vehicle front portion frame structure relating to the present embodiment is applied;
Fig. 5 is a side view corresponding to Fig. 2 and illustrating modified example 1; and
Fig. 6 is a side view corresponding to Fig. 2 and illustrating modified example 2.

### DETAILED DESCRIPTION

A vehicle front portion frame structure relating to an embodiment of the present invention is described hereinafter by using the drawings. Note that arrow FR that is shown appropriately in the respective drawings indicates the front side in the vehicle longitudinal direction, and arrow UP indicates the upper side in the vehicle vertical direction. Arrow RH indicates the right side in the vehicle transverse direction, and indicates the vehicle transverse direction outer side in the present embodiment. Hereinafter, when description is given by merely using longitudinal, vertical and left-right directions, they refer to the longitudinal of the vehicle longitudinal direction, the vertical of the vehicle vertical direction and the left and right of the vehicle left-right direction (the vehicle transverse direction), unless otherwise stated.

### <Structure of Vehicle Front Portion Frame Structure>

First, the structure of a vehicle front portion frame structure relating to the present embodiment is described.

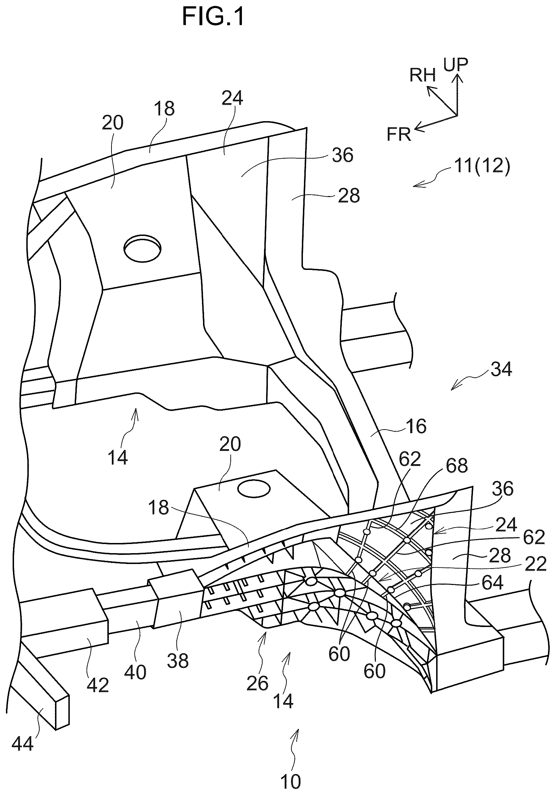

Front portion (vehicle front portion) 11 of a vehicle 12, to which a vehicle front portion frame structure 10 relating to the present embodiment is applied, is illustrated in Fig. 1. Although not illustrated, this vehicle 12 is, for example, an electric vehicle or a fuel cell vehicle that runs on motive power generated at a power unit.

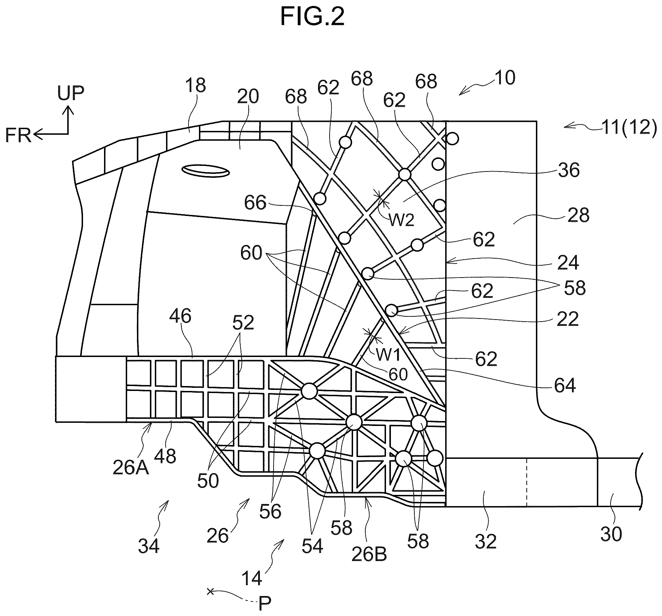

Fig. 2 illustrates a side view of the vehicle 12 illustrated in Fig. 1. Wheelhouses 14 in which unillustrated front wheels are disposed are provided at the left and right of the vehicle front portion 11, respectively, at the vehicle 12 illustrated in Fig. 1 and Fig. 2. The right-side wheelhouse 14 and the left-side wheelhouse 14 are connected by a cross member 16.

An apron upper member 18 extends along the vehicle longitudinal direction at the upper end of each of the wheelhouses 14. A so-called suspension tower portion 20 and a curved portion 22 are provided at the vehicle transverse direction inner side of the apron upper member 18. The curved portion 22 is provided at the rear side of the suspension tower portion 20, and is formed so as to bulge out toward the vehicle rear side. An upper member 24, which extends in the vehicle vertical direction and the vehicle longitudinal direction, is provided at the upper side of the curved portion 22 and further toward the vehicle transverse direction outer side than the curved portion 22.

A side member 26 that extends in the vehicle vertical direction and the vehicle longitudinal direction is provided at the lower side of the suspension tower portion 20 and the curved portion 22. A front pillar mounting portion 28 that extends in the vehicle vertical direction and the vehicle longitudinal direction is provided at the rear side of the upper member 24 and the side member 26. Note that this front pillar mounting portion 28 is a so-called front pillar inner that structures the vehicle transverse direction inner side of a front pillar. An unillustrated side outer that structures a portion of the design of the vehicle 12 is mounted to the front pillar mounting portion 28.

A connecting portion 32, to which are connected the vehicle transverse direction outer side of an unillustrated floor panel and a front end portion 30A of a rocker 30 that extends in the vehicle longitudinal direction, is provided at the lower side of the front pillar mounting portion 28. The front end portion 30A of the rocker 30 can be connected by, for example, bolts or welding, via this connecting portion 32.

Here, in the present embodiment, the left and right wheelhouses 14, which include the suspension tower portions 20 and the curved portions 22, and the left and right side members 26, the left and right upper members 24, the left and right front pillar mounting portions 28 and the cross member 16 are molded integrally as an integrally cast member (integrally molded part) 34 by casting and of a material such as, for example, an aluminum alloy or a magnesium alloy.

Namely, the wheelhouses 14, the side members 26, the upper members 24, the front pillar mounting portions 28 and the cross member 16 respectively are portions of the integrally cast member 34. Therefore, in the following description, the wheelhouses 14, the side members 26, the upper members 24, and the cross member 16 are described as the wheelhouse portions 14, the side member portions 26, the upper member portions 24, and the cross member portion 16, respectively.

In the integrally cast member 34 of the present embodiment, in manufacturing the mold, for example, the dies are slid toward the vehicle transverse direction outer sides when molding the vehicle transverse direction outer side surfaces of the wheelhouse portions 14, the side member portions 26 and the upper member portions 24. Therefore, the wheelhouse portions 14, the side member portions 26 and the upper member portions 24 in the present embodiment are formed such that the vehicle transverse direction outer sides thereof are open.

### (Wheelhouse Portions)

The wheelhouse portions 14 of the present embodiment are described first.

As described above, the wheelhouse portions 14 are structured to include the suspension tower portions 20, the curved portions 22 and the side member portions 26. As illustrated in Fig. 1, the wheelhouse portions 14 have vertical wall portions 36 serving as base portions that extend in the vehicle longitudinal direction and the vehicle vertical direction at the vehicle transverse direction inner sides.

Note that, at the upper side of the side member portion 26 that is described later, the vertical wall portion 36 bulges out toward the vehicle transverse direction inner side along the shape of the suspension tower portion 20, and, at the vehicle rear side of the suspension tower portion 20, the vertical wall portion 36 is formed so as to bulge out toward the vehicle rear side so as to connect the suspension tower portion 20 and the upper member portion 24 along the shape of the curved portion 22.

Further, a connecting portion 38, which is formed in the shape of a rectangular pillar and extends in the vehicle vertical direction, is provided at the front end of the wheelhouse portion 14. A beam member 40 extending in the vehicle longitudinal direction and a crash box 42 are connected via this connecting portion 38. A front bumper 44 that extends in the vehicle transverse direction is connected to the front ends of the crash boxes 42.

As illustrated in Fig. 2, the side member portion 26 is structured to include an upper wall portion 46, which extends along the vehicle longitudinal direction and structures the upper end portion of the side member portion 26, and a lower wall portion 48, which structures the lower end portion of the side member portion 26. Plural lateral wall portions 50 extend along the vehicle longitudinal direction between the upper wall portion 46 and the lower wall portion 48. The upper wall portion 46, the lower wall portion 48 and the lateral wall portions 50 respectively stand erect from the vertical wall portion 36 of the wheelhouse portion 14 toward the vehicle transverse direction outer side.

Plural vertical ribs 52 are provided along the vehicle vertical direction between the upper wall portion 46 and the lower wall portion 48, at a front portion 26A side of the side member portion 26. These vertical ribs 52 are arrayed along the vehicle longitudinal direction. The suspension tower portion 20 is provided at the upper side of the front portion 26A of the side member portion 26, and supports the upper end portion of the suspension of the unillustrated front wheel.

On the other hand, plural inclined ribs 54, which are inclined toward the vehicle upper side while heading toward the vehicle rear side, and plural inclined ribs 56, which are inclined toward the vehicle lower side while heading toward the vehicle rear side, are provided at a rear portion 26B side of the side member portion 26 between the upper wall portion 46 and the lower wall portion 48, and are connected together and form a truss structure.

Bosses 58, which are substantially solid cylindrical or substantially cylindrical tubular, are provided at the points of intersection of the inclined ribs 54, 56 and the lateral wall portions 50. At the time of molding the integrally cast member 34 that includes the wheelhouses 14, the bosses 58 are seats that are abutted by unillustrated push-out pins used at the time of releasing the integrally cast member 34 from the mold. Therefore, the bosses 58 are disposed so as to be offset from one another in the vehicle longitudinal direction so as to not overlap one another in the vertical direction, in order for the integrally cast member 34 to be released from the mold in a well-balanced manner.

Note that the positions of the bosses 58 can be changed appropriately in accordance with the mass balance of the integrally cast member 34. Further, the bosses 58 function not only as seats that the push-out pins abut, but also may be used as seats for fastening with other parts.

Here, in the present embodiment, the curved portion 22 is provided at the upper side of the rear portion 26B of the side member portion 26. Plural convex beads (projecting portions) 60, which project out from the vertical wall portion 36 and are inclined toward the vehicle upper side while heading toward the vehicle rear side from the upper wall portion 46 of the side member portion 26, are provided so as to extend at the vehicle transverse direction outer side surface of the curved portion 22.

For example, the plural (here, four) convex beads 60 are formed in a radial form, with the axle side of the unillustrated front wheel being the substantial center (virtual point P) and the upper wall portion 46 of the side member portion 26 being the points of origin. Note that, for example, width dimensions W1, in the directions substantially orthogonal to the extending directions, of the convex beads 60 are substantially constant along the extending directions. The projecting heights of the convex beads 60 are formed to be lower than those of first ribs 62 that are described later.

### (Upper Member Portions)

As described above, the upper member portions 24 are provided at the upper sides of the curved portions 22 and further toward the vehicle transverse direction outer sides than the curved portions 22, as illustrated in Fig. 1. At the vehicle transverse direction inner sides thereof, the upper member portions 24 have the vertical wall portions 36 that are connected to the curved portions 22 and extend in the vehicle longitudinal direction and the vehicle vertical direction.

In the present embodiment, as illustrated in Fig. 2, the apron upper member 18, which is provided along the vehicle longitudinal direction at the upper end of the wheelhouse 14, is provided so as to extend at the upper end of the upper member portion 24. The plural first ribs 62, which stand erect from the vertical wall portion 36 and are inclined toward the vehicle upper side while heading toward the vehicle rear side, are provided so as to extend at the vehicle transverse direction outer side surface of the upper member portion 24. Note that, for example, width dimensions W2, in the directions substantially orthogonal to the extending directions, of the first ribs 62 are substantially constant along the extending directions thereof.

Here, a boundary rib (second rib) 64, which stands erect from the vertical wall portion 36 toward the vehicle transverse direction outer side, is provided between the upper member portion 24 and the curved portion 22. This boundary rib 64 is formed from the upper end side of the suspension tower portion 20 to the lower end side of the front pillar mounting portion 28. The plural first ribs 62 are provided to extend with this boundary rib 64 being the points of origin thereof. The first ribs 62 have substantially the same projecting heights as the boundary rib 64. Further, the bosses 58 are provided between the boundary rib 64 and the first ribs 62.

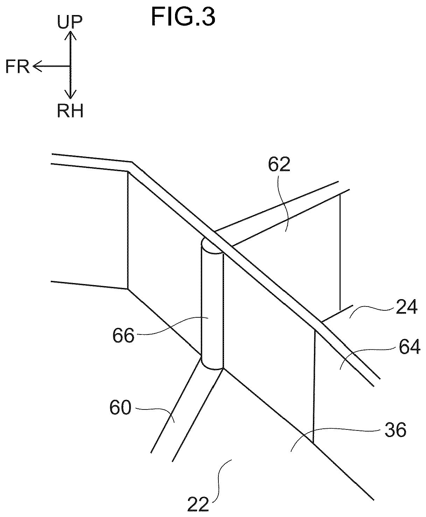

In the present embodiment, as illustrated in Fig. 3, the first ribs 62 that are formed at the upper member portion 24 are provided on extension lines of the convex beads 60. The convex beads 60 formed at the curved portion 22 and the first ribs 62 formed at the upper member portion 24 are connected via the boundary rib 64.

Here, in the present embodiment, convex beads 66, which are connected to the convex beads 60 formed at the vertical wall portion 36 of the curved portion 22 and which project out toward the side opposite the first ribs 62, are provided so as to extend substantially to the upper end of the boundary rib 64, at, for example, the curved portion 22 side (the side opposite the first ribs 62) of the boundary rib 64. Note that portions of the bosses 58 provided between the boundary rib 64 and the first ribs 62 may be exposed toward the curved portion 22 side at the boundary rib 64, and the convex beads 60 and the first ribs 62 may be connected via these bosses 58.

On the other hand, as described above, the convex beads 60 that are illustrated in Fig. 2 are formed in a radial form with the axle side of the front wheel being the substantial center and the upper wall portion 46 of the side member portion 26 being the points of origin. Because the first ribs 62 are connected to the convex beads 60 via the boundary rib 64, the first ribs 62 are disposed at a predetermined interval along the boundary rib 64.

Plural second ribs 68, which stand erect from the vertical wall portion 36 and intersect the plural first ribs 62, are provided so as to be apart from one another at the vehicle transverse direction outer side surface of the upper member portion 24. These second ribs 68 are, for example, formed to be substantially the same projecting heights as the first ribs 62, and are provided so as to extend from the apron upper member portion 18 all the way to the front end side of the front pillar mounting portion 28.

Note that the angles at which the first ribs 62 and the second ribs 68 intersect one another do not necessarily have to be uniform, and the angles may, of course, differ in accordance with the intersecting regions. Further, the first ribs 62 and the second ribs 68 may intersect in substantially orthogonal states, or may intersect in substantially T-shaped states.

### <Operation and Effects of Vehicle Front Portion Frame Structure>

Operation and effects of the vehicle front portion frame structure relating to the present embodiment are described next.

As illustrated in Fig. 1, in the present embodiment, the side member portions 26, the wheelhouse portions 14 and the upper member portions 24 are provided. The side member portions 26, the wheelhouse portions 14 and the upper member portions 24 are molded integrally as the integrally cast member 34.

The side member portion 26 is provided at the transverse direction outer side of the vehicle so as to extend in the vehicle longitudinal direction. The wheelhouse portion 14 has the curved portion 22 that bulges out toward the vehicle longitudinal direction rear side. The upper member portion 24 is provided further toward the vehicle upper side than the side member portion 26. The first ribs 62, which extend toward the vehicle upper side while heading toward the front pillar mounting portion 28, are formed at the upper member portion 24.

Further, as illustrated in Fig. 2, the convex beads 60, which extend from the side member portion 26 toward the first ribs 62, project-out from the vehicle transverse direction outer side surface of the curved portion 22 provided at the wheelhouse portion 14.

In this way, in the present embodiment, the rigidity of the integrally cast member 34 itself can be improved by providing the convex beads 60 at the curved portion 22 of the wheelhouse portion 14 and providing the first ribs 62 at the upper member portion 24. Further, load that is inputted along the vehicle longitudinal direction to the side member portion 26 passes through the wheelhouse portion 14 and the upper member portion 24 via the convex beads 60 and the first ribs 62 and can be transmitted toward the front pillar mounting portion 28 side.

Namely, in the present embodiment, at the time when load is transmitted from the side member portion 26 toward the front pillar mounting portion 28 side, the number of load transmission paths can be increased by passing through the wheelhouse portion 14 and the upper member portion 24 via the convex beads 60 and the first ribs 62. Accordingly, in the present embodiment, load transmitted from the side member portion 26 toward the front pillar mounting portion 28 side can be dispersed.

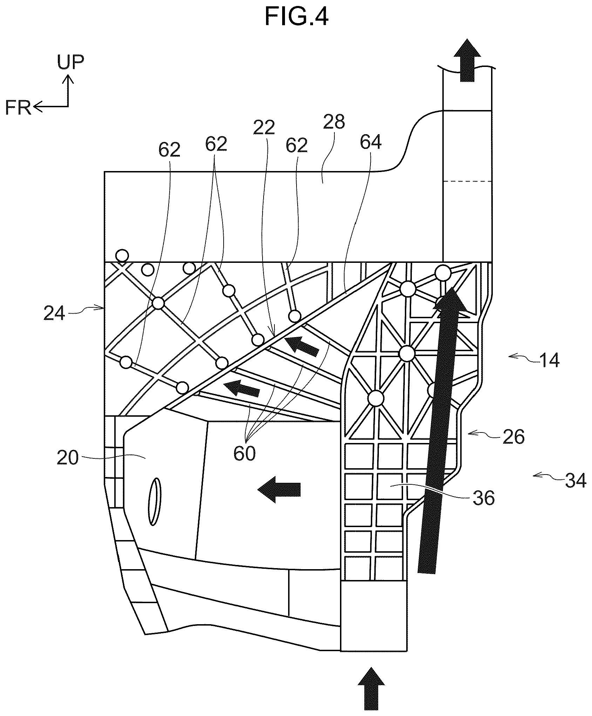

By the way, as described above, in the present embodiment, the side member portions 26, the wheelhouse portions 14 and the upper member portions 24 are integrally molded as the integrally cast member 34. In molding the integrally cast member 34, for example, as illustrated in Fig. 4, the dies (not illustrated) of the integrally cast member 34 are disposed such that the suspension tower portions 20 of the integrally cast member 34 are at the lower side and the front pillar mounting portions 28 are at the upper side.

The fill opening through which molten metal is filled into the mold is provided at the lower side of the mold and between the pair of left and right side member portions 26, and the molten metal is filled via passageways (runners) into the mold (into the cavity) via sprues (gates) that are provided at the vertical wall portion 36 sides of the left and right side member portions 26.

As shown by the arrows as an example, the molten metal that is filled into the cavity is guided from the front end sides of the side member portions 26 toward the cross member 16 (see Fig. 1) side, and is guided from the side member portions 26 toward the wheelhouse portions 14 and upper member portions 24 sides. Note that a decompression device is provided at the upper side of the mold, and the gas within the cavity is made to escape, and the flow of the molten metal within the cavity is improved.

In the present embodiment, due to the convex beads 60 being provided at the curved portions 22 of the wheelhouse portions 14 and the first ribs 62 being provided at the upper member portions 24, at the time of molding the integrally cast member 34, the number of flow paths of the molten metal can be increased, and the moldability of the integrally cast member 34 improves.

In the present embodiment, as illustrated in Fig. 2, the first ribs 62 are provided in a radial form, with the side member portion 26 side thereof being the substantial center. By providing the plural first ribs 62 in this way, the number of transmission paths at the time when load, which is inputted to the side member portion 26 along the vehicle longitudinal direction, is transmitted toward the upper member portion 24 increases by that much.

Moreover, in the present embodiment, due to the convex beads 60 being connected to the first ribs 62, the load transmission loss with respect to load inputted along the vehicle longitudinal direction can be reduced. Further, due to the first ribs 62 being connected to the convex beads 60 via the boundary rib 64, the flow of molten metal improves at the time of molding the integrally cast member 34 of metal.

In the present embodiment, the projecting heights of the convex beads 60 are formed to be lower than those of the first ribs 62. Therefore, in the present embodiment, as compared with a case in which the convex beads 60 are formed to be the same projecting heights as the first ribs 62, space within the wheelhouse portions 14 is ensured, and the passenger compartment space can be enlarged by that much.

Further, in the present embodiment, the width dimension W1 of the convex beads 60 is formed to be smaller than the width dimension W2 of the first ribs 62. Namely, the convex beads 60 are thinner than the first ribs 62. Therefore, at the time of molding the integrally cast member 34, the flow path surface area of the molten metal is smaller at the convex beads 60 than at the first ribs 62, and the filling speed of the molten metal that is guided from the convex beads 60 into the first ribs 62 increases.

Still further, in the present embodiment, the second ribs 68 that intersect the first ribs 62 are provided at the upper member portion 24. Due thereto, the number of load transmission paths at the time when load, which is inputted to the side member portion 26 along the vehicle longitudinal direction, is transmitted to the upper member portion 24 increases more, and the load transmitted to the upper member portion 24 can be dispersed more.

Moreover, in the present embodiment, the plural convex beads 60, which are provided at the curved portion 22 of the wheelhouse portion 14, extend in a radial form toward the upper member portion 24 side, at which the first ribs 62 are provided, with the side member portion 26 side being the substantial center and with plural places at the curved portion 22 being the points of origin.

In this way, in the present embodiment, due to the points of origin of the convex beads 60 being at plural places, the plural convex beads 60 are in states of being independent of one another and can be provided with gaps between one another. Due thereto, at the time of cooling the integrally cast member 34, the molten metal can be cooled efficiently.

### (Modified Examples of Present Embodiment)

As illustrated in Fig. 2, in the present embodiment, the convex beads 60 provided at the curved portion 22 of the wheelhouse portion 14 extend in a radial form toward the upper member portion 24 side, at which the first ribs 62 are provided, with the side member portion 26 side being the substantial center and with plural places at the curved portion 22 being the points of origin. However, embodiments are not limited to this.

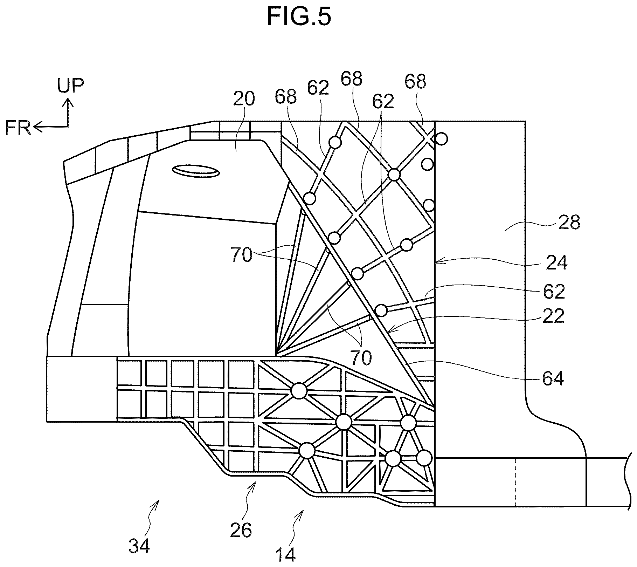

For example, as modified example 1, as illustrated in Fig. 5, plural convex beads (projecting portions) 70 may extend in a radial form with the side member portion 26 side being the substantial center and with a single place at the curved portion 22 being the point of origin. In this case, at the point of origin sides of the convex beads 70, the plural convex beads 70 merge, and therefore, the flow path surface area is large. Thus, the flow path surface areas at the portions of the projecting portions that are set further apart from one another, convex beads 70 become smaller, and the flow rate can be quickened by that much. Further, although not illustrated, the plural convex beads 70 may extend in a radial form with plural places being the points of origin thereof. Moreover, both the plural convex beads 70 that extend in a radial form with at least one place being the point of origin, and the convex beads 70 that extend independently, may be provided.

Further, in the present embodiment, as illustrated in Fig. 2, the width dimension W1 of the convex beads 60 is substantially constant along the extending direction, but embodiments are not limited to this.

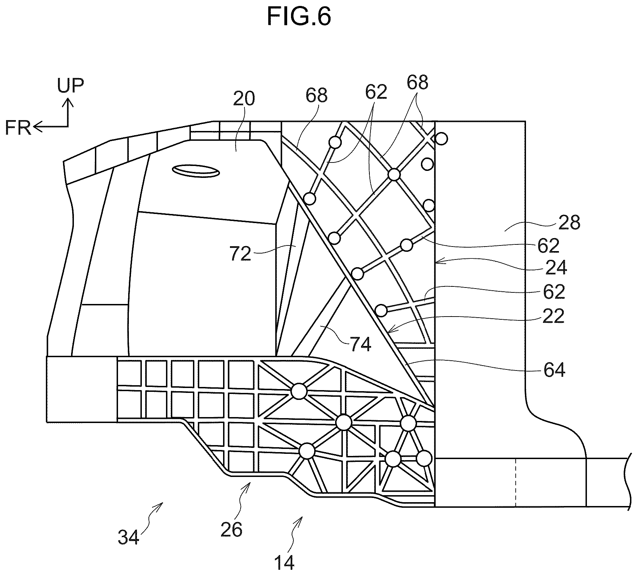

For example, as modified example 2, a convex bead 74 illustrated in Fig. 6 may be formed such that the width dimension thereof gradually becomes smaller from the side member portion 26 side toward the upper member portion 24 side. Due to the width dimension of the convex bead 74 gradually becoming smaller from the side member portion 26 side toward the upper member portion 24 side in this way, the flow path surface area of the molten metal becomes smaller from the side member portion 26 side toward the upper member portion 24 side. Therefore, at the time of molding the integrally cast member 34, the filling speed increases by that much.

Moreover, a convex bead 72 illustrated in Fig. 6 may be formed such that the width dimension thereof gradually becomes larger from the side member portion 26 side toward the upper member portion 24 side. Due to the width dimension of the convex bead 72 gradually becoming larger from the side member portion 26 side toward the upper member portion 24 side in this way, the flow path surface area of the molten metal becomes larger from the side member portion 26 side toward the upper member portion 24 side. Therefore, at the time of molding the integrally cast member 34, the flow of the molten metal improves, and the filling efficiency improves.

Here, by adjusting the flow path surface areas of the molten metal as with the convex beads 72, 74, the speed of the flow of the molten metal and the like can be adjusted, and the filling efficiency of the molten metal can be improved.

Moreover, in the present embodiment, as illustrated in Fig. 2, the width dimension W1 of the convex beads 60 is formed to be smaller than the width dimension W2 of the first ribs 62. Due thereto, the effect of increasing the filling speed of the molten metal that is guided from the convex beads 60 into the first ribs 62 at the time of molding the integrally cast member 34 is obtained. However, embodiments are not limited to this.

For example, although not illustrated, the width dimension W1 of the convex beads 60 may be formed to be larger than the width dimension W2 of the first ribs 62. In this case, the convex beads 60 are thicker than the first ribs 62, and, at the time of molding the integrally cast member 34, the flow path surface area of the molten metal is greater at the convex beads 60 than at the first ribs 62, and the flow of the molten metal improves, and the filling efficiency of the molten metal into the convex beads 60 improves. Due thereto, at the time of molding the integrally cast member 34, the filling efficiency of the molten metal into the first ribs 62, which are provided at the downstream side of the convex beads 60 in the direction of flow of the molten metal, also improves.

Further, in the present embodiment, as illustrated in Fig. 2, the first ribs 62 are provided on extension lines of the convex beads 60. However, because it suffices for the convex beads 60 and the first ribs 62 to be connected via the boundary rib 64, the first ribs 62 do not necessarily have to be provided on extension lines of the convex beads 60.

Moreover, in the present embodiment, the convex beads 60 extend from the upper wall portion 46 of the side member portion 26 toward the first ribs 62 side. However, it suffices for the convex beads 60 to extend toward the first ribs 62, and therefore, the convex beads 60 do not necessarily have to extend from the upper wall portion 46 of the side member portion 26. For example, the convex beads 60 may extend toward the first ribs 62 in independent states at the upper side of the upper wall portion 46.

In the present embodiment, the projecting heights of the convex beads 60 are lower than those of the first ribs 62, as illustrated in Fig. 3. However, the convex beads 60 may be formed to substantially the same projecting heights as the first ribs 62. Further, the convex beads 60, the first ribs 62 and the second ribs 68 do not necessarily have to be the same projecting heights along the extending directions thereof.

For example, the convex beads 60 may be formed so as to gradually become higher toward the first ribs 62 side. Moreover, at the plural convex beads 60, the width dimensions, the projecting heights, and the like thereof may differ respectively at the regions where the convex beads 60 are formed. The same as these convex beads 60 holds for the plural first ribs 62 and second ribs 68 as well.

Moreover, although the second ribs 68 illustrated in Fig. 2 are formed to substantially the same projecting heights as the first ribs 62 in the present embodiment, they do not necessarily have to be formed to substantially the same projecting heights. For example, the second ribs 68 may be formed to be shorter than the first ribs 62, or may be made to be convex beads that are similar to the convex beads 60.

The shapes of the convex beads 60, the first ribs 62 and the second ribs 68 can be changed appropriately in consideration of the positional relationships between the upper wall portion 46 of the side member portion 26 and the convex beads 60 that are adjacent to one another, the flowability of the molten metal at the time of molding the integrally cast member 34, the cooling efficiency at the time of cooling the integrally cast member 34, and the like.

### (Supplemental Notes Regarding Above-Described Embodiment)

Note that, as illustrated in Fig. 1, the above embodiment describes an example in which, at the integrally cast member 34, the left and right wheelhouse portions 14 and the cross member portion 16 are molded integrally by casting. However, embodiments are not limited to this.

For example, although not illustrated, a right-side cast member, in which the right-side wheelhouse 14 and the right half of the cross member portion 16 are molded integrally by casting, and a left-side cast member, in which the left-side wheelhouse 14 and the left half of the cross member portion 16 are molded integrally by casting, may be joined by a joining portion and made integral. In this case, the cast members can be formed to be smaller than the integrally cast member 34, and therefore, a reduction in costs accompanying the molding mechanisms, including the molding facilities, is possible.

Here, the joining portion may be joined such that the distal end of the right half of the cross member portion 16 and the distal end of the left half of the cross member portion 16 overlap in the vehicle longitudinal direction or the vehicle vertical direction. Further, the distal end of the right half of the cross member portion 16 and the distal end of the left half of the cross member portion 16 may be joined together by another member in a state in which both are abutting one another.

Further, although the side member portion 26 is molded integrally with the wheelhouse portion 14 in the present embodiment, both do not necessarily have to be molded integrally. For example, the side member portion 26 may be fixed as another member to the lower side of the wheelhouse portion 14. In this case, the materials of the wheelhouse portion 14 and the side member portion 26 can be made to be different.

Moreover, in the present embodiment, the front pillar mounting portions 28 are molded integrally with the integrally cast member 34, but the front pillar mounting portions 28 may be molded as members separate from the integrally cast member 34. In this case, the materials of the wheelhouse portions 14 and the front pillar mounting portions 28 can be made to be different.

Although an embodiment of the present invention has been described above, the present invention is not limited to this embodiment, and the embodiment and various modified examples may be combined appropriately. The present invention can, of course, be implemented in various forms within a scope that does not depart from the gist thereof.

## Claims

1. A vehicle front portion frame structure (10), comprising:
side members (26) extending in a vehicle longitudinal direction at transverse direction outer sides of a vehicle;
wheelhouses (14) that are formed or provided integrally with the side members (26), and that have curved portions (22) bulging out toward a rear side in the vehicle longitudinal direction; and
upper members (24) that are formed integrally with the wheelhouses (14) and are provided further toward a vehicle upper side than the side members (26), and at which are formed first ribs (62) that extend toward the vehicle upper side while heading toward front pillar mounting portions (28),
wherein projecting portions (60), which project out from vehicle transverse direction outer side surfaces of the curved portions (22) and extend from the side members (26) toward the first ribs (62), are provided.

2. The vehicle front portion frame structure (10) of claim 1, wherein a plurality of the first ribs (62) are provided in a radial form with a side member side being a substantial center.

3. The vehicle front portion frame structure (10) of claim 1, wherein the projecting portions (60) are connected directly or indirectly to the first ribs (62).

4. The vehicle front portion frame structure (10) of claim 1, wherein projecting heights of the projecting portions (60) are lower than projecting heights of the first ribs (62).

5. The vehicle front portion frame structure (10) of claim 1, wherein width dimensions in directions substantially orthogonal to extending directions of the projecting portions (60) are smaller than width dimensions in directions substantially orthogonal to extending directions of the first ribs (62).

6. The vehicle front portion frame structure (10) of claim 1, wherein width dimensions in directions substantially orthogonal to extending directions of the projecting portions (60) are larger than width dimensions in directions substantially orthogonal to extending directions of the first ribs (62).

7. The vehicle front portion frame structure (10) of claim 1, wherein second ribs (64, 68) that intersect with the first ribs (62) are provided at the upper members (24).

8. The vehicle front portion frame structure (10) of claim 1, wherein width dimensions, in directions substantially orthogonal to extending directions, of the projecting portions (60), are different at side member sides of the projecting portions (60) from width dimensions at upper member sides of the projecting portions (60).

9. The vehicle front portion frame structure (10) of claim 1, wherein a plurality of the projecting portions (60) extend in a radial form toward an upper member side with a side member side being a substantial center and with one place at the curved portions (22) being a point of origin of the projecting portions (60).

10. The vehicle front portion frame structure (10) of claim 1, wherein a plurality of the projecting portions (60) extend in a radial form toward an upper member side with a side member side being a substantial center and with a plurality of places at the curved portions (22) being points of origin of the projecting portions (60).
